# EUROPEAN PATENT SPECIFICATION

(11) **EP 0 875 104 B1**
(45) Date of publication and mention of the grant of the patent: **02.05.2007**
(21) Application number: 97902878.4
(22) Date of filing: 15.01.1997
(51) Int. Cl.: H04B 10/00

(54) **TRANSACTION SUPPORT FOR IrDA-COMPATIBLE SYSTEMS**
TRANSAKTIONSMEDIUM FÜR IrDA-KOMPATIBLE SYSTEME
SUPPORT DE TRANSACTION POUR SYSTEMES COMPATIBLES IrDA

(30) Priority: 16.01.1996 US 9954 P
(43) Date of publication of application: 04.11.1998
(73) Proprietor: Nokia Corporation, 02150 Espoo (FI); NOKIA MOBILE PHONES INC., Tampa, FL 33607 (US)
(72) Inventor: PETRI, Nykanen, Irving, TX 75038 (US)
(74) Representative: Slingsby, Philip Roy
(86) International application number: PCT/US1997/000359
(87) International publication number: WO 1997/026721

(56) References cited:
- THE IRDA PLATFORM, S. WILLIAMS &I. MILLAR, HP LABORATORIES, 1995, pages 1-7, XP002329651 BRISTOL
- "INFRARED DATA ASSOCIATION PLUG AND PLAY EXTENSIONS TO LINK MANAGEMENT PROTOCOL" INFRARED DATA ASSOCIATION PLUG AND PLAY EXTENSIONS TO LINK MANAGEMENT PROTOCOL, 8 January 1996 (1996-01-08), pages 1-13, XP002131566

## Description

### BACKGROUND OF THE INVENTION

### Field of the Invention:

The present invention relates to protocols for use with infra-red (IR) transmitting devices, e.g., the IrDA (Infra-red Data Association) transmission protocols, and, more particularly, to a method and means for providing transaction support for IrDA-compatible systems including transceivers with media sense.

### Prior Art:

The Media Access Control (MAC) rules of the IrLAP (Link Access Protocol) specification presently being discussed by the IrDA for standardizing infra-red 9IR) communications (this and related standards information are available electronically on the IrDA web site located at "irda.org") require that before initiating an IR transmission a transceiver device must be set to listen for at least 500 ms and detect no IR data link connection during that time. This 500 ms delay may cause problems with certain systems in which the IrLAP specification might be applied, such as remote controllers. These delay problems can be avoided to some extent if the transmitter device is set to continuously listen in the IR domain. In such case, if no IR traffic is detected when transmission is requested, a connection-less data transmit request can be fulfilled instantaneously, whereas in the usual case connection-less services are slowed down. However, such continuously listening devices have a major drawback when traffic is detected in the IR domain as the device is rendered useless until the IR domain is free and available to transmit.

An introduction to the IrDA specification is provided by "The IrDA Platform", S. Williams & I. Miller, HP Laboratories, Bristol, 1995.

Alternative approaches that could be used to make the IrDA protocols more attractive for use with remote controllers, include:
the MAC rules could be relaxed in the IrLAP specifications in such a way that the connection-less data service would have relaxed MAC, since connection orientated data transmission is able to recover from occasional lost frames when prevented from being sent by a connection-less data frame; or
low-ended devices could be authorized to emit a connection-less data frame even if they detect other traffic, but some rules concerning timing limits would have to be generated so that the connection-less data would not destroy a link connection; or
the user data for higher layers, i.e., objects, could be placed in the XID frames used for sniffing, which would give access to the relaxed MAC of the sniffing frames.

From a hardware standpoint, systems in the consumer electronics field require longer transmission distances than those supported by most IrDA-SIR (the official IrDA specification) implementations. Thus, consumer electronics applications may require changes in the IrDA-SIR definition for the minimum distance required from transceiver devices and for the maximum output power that may be used.

The IrDA connection-oriented data service specifications do not fit inside the limitations of consumer electronics devices. The size of the implementation and the processing power required rule out the use of the connection-oriented data service as a viable option in this regard. To achieve connectivity between IrDA devices supporting IrDA specifications and devices in the consumer electronics field, a common minimum functionality must be selected in such a way that both high-end desk top systems and low-end systems, such as remote controllers, can rely on this functionality.

### Problem to be Solved:

It is therefore a problem in the art to combine the functionality of the connection-less data service of the IrLAP and IrLMP (Link Management Protocol) with object encapsulation rules, as defined in IrDA object exchange (OBEX) specifications, to accomodate various IR transceiver devices particularly those used in consumer electronics.

### Object:

It is accordingly an object of the present invention to provide a method and means for providing transaction support for IrDA-compatible systems including transceivers with media sense.

It is another object of the present invention to provide such support by placing the object exchange rules of the IrDA OBEX specifications in the data of the connection-less service of the IrLAP and IrLMP protocols.

### SUMMARY OF THE INVENTION

The present invention involves a method and means to adapt the MAC rules of the IrLAP specification to accomodate various IR transceiver devices with or without media sense. The invention utilizes an IrDA protocol stack having a series of layers including: 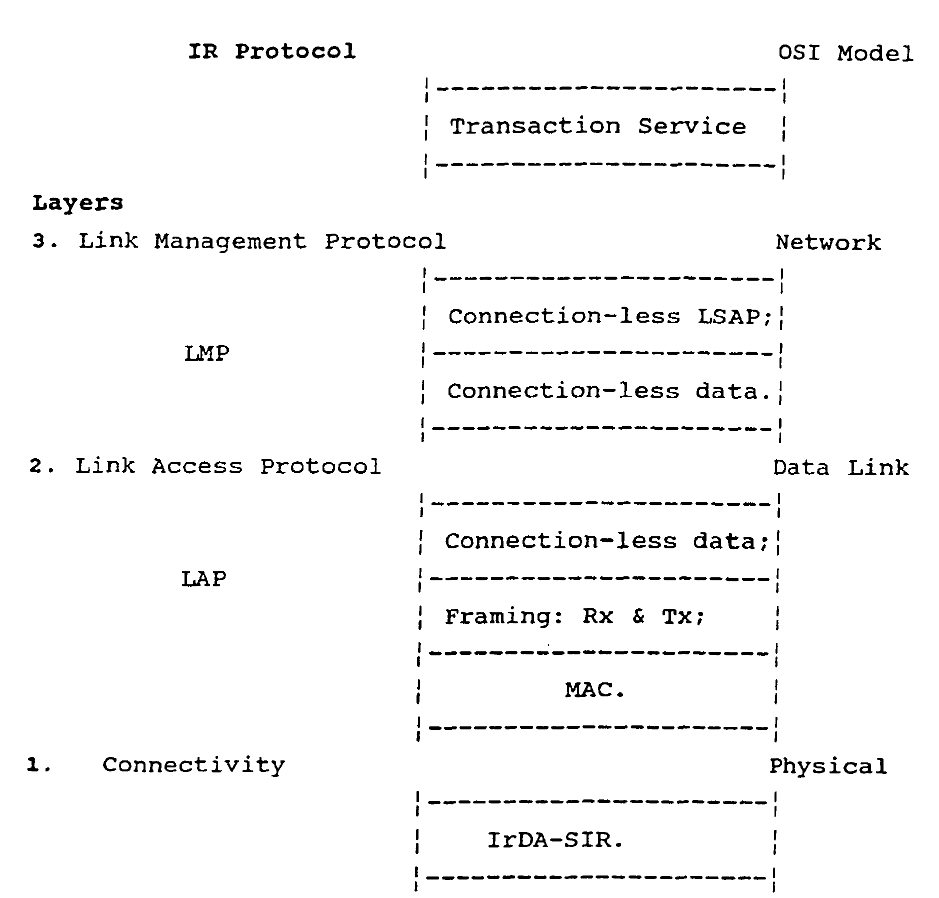 where OSI is Open Systems Interconnection and LSAP is the Link Service Access Point.

This kind of protocol stack can be applied to a very large variety of devices, such as, remote controllers with feedback for tuners, televisions, videos, audio equipment, and PCs. Also, it can be used for data transactions by request, e.g., pager reporting of received numbers, phone reporting of caller ID, or cellular telephone sending of a phone book entry. Further, it is applicable to data acquisition systems, such as, portable GPS reporting of changes of location and medical systems.

Various ways for implementing the invention comprise:
Using the connection-less data service;
Using XID frames; or
Using proprietary or open object definitions.

The preferred approach is to use the connection-less data service that is already present in the IrDA specification along with the emerging OBEX object definitions. This approach requires no changes in existing systems and the open service specification ensures connectivity between systems from different vendors.

### DETAILED DESCRIPTION OF THE PREFERRED EMBODIMENT

The present invention is directed to a method and means for adapting the Media Access Control rules of the IrLAP specification to accomodate various IR transceiver devices with or without media sense, particularly those used in consumer electronics. As seen in the following diagram, the invention preferably comprises an IrDA protocol stack having a series of functional layers, along the lines of the Open Systems Interconnection (OSI) Model, including: 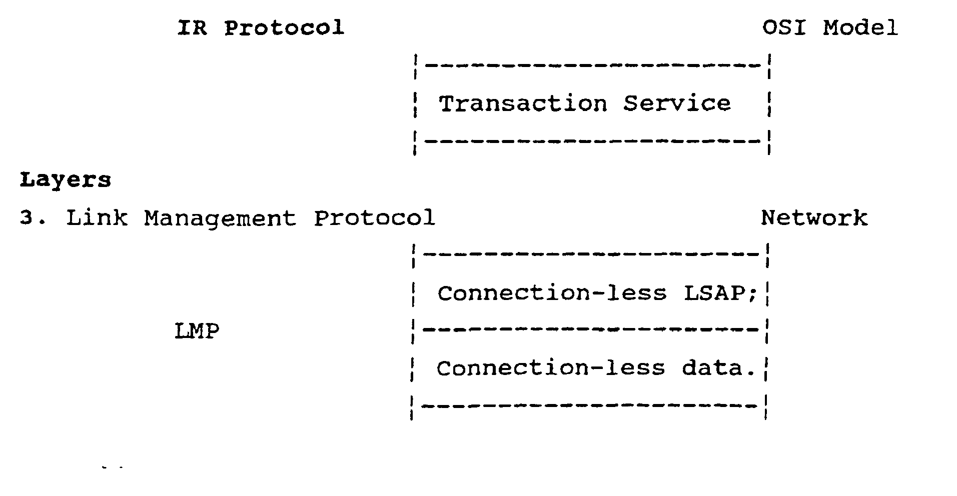 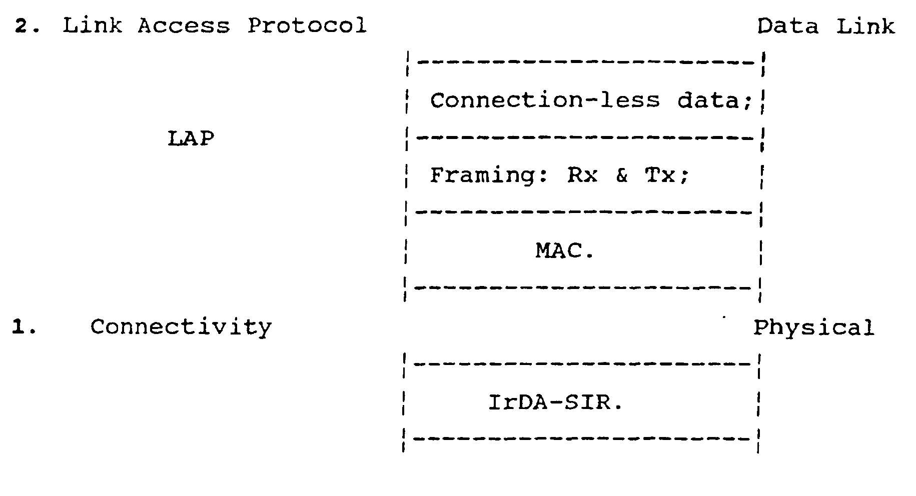 where OSI is Open Systems Interconnection and LSAP is the Link Service Access Point.

The Physical layer, Layer 1., may be different from device to device. The IrDA-SIR, the official IrDA specification, i.e., involving speeds up to 115.2 kbit/sec, is shown in the diagram. However, other such specifications might be used, such as the IrDA-FIR, which is a proposed Fast IR with speeds up to 1.152 Mbit/sec and 4 Mbit/sec, and the Sharp DASK, which is a Sharp specific system with speeds up to 57.6 kbit/sec.

The Data Link layer protocol is the IrLAP protocol layer, Layer 2. This protocol supports discovery of other devices and reliable data transmission service. This layer must follow MAC rules as well as indicating correctly to other devices that the IR medium is in use.

The Network layer protocol is the IrLMP protocol layer, Layer 3. This protocol supports service-to-service connection binding, and division of the reliable IrLAP connection to multiple channels. This frame-by-frame multiplexing enables multiple concurrent services.

On top of the IrLMP layer there may be multiple protocols implementing various functions, such as those of a transport layer, i.e., segmentation and reassembly, flow control, and so on. The layer on top of the others is the application layer which contains the services that support functions needed by applications, such as the IrDA specified Information Access Service (IAS). The IAS consists of a client and server, with the client being able to make inquiries to the server concerning services that the host system supports. The server fetches information from a local database consisting of service instance specific information, the most important piece of which information is the LSAP ID (Link Service Access Point) at which the service instance is located in the host system. This information is used when service-to-service connection is made.

By way of the functions of the layers, the following description illustrates some of the more important features in this regard.

### Discovery:

The discovery process, supported by the Data Link layer protocol, i.e., the IrLAP protocol layer, Layer 2, is used to enable a station to find out what other devices can be seen in the IR medium. This process is implemented by the IrLAP layer, though it is channeled through the IrLMP layer to the users of that layer. The discovery process is dynamic, and so allows multiple devices to be identified by one query. Every responding device may return to the initiator:
1) a 32 bit device address (variable by specification);
2) service hints by means of a bitfield indicating the service categories supported, for example, fax, modem, telephony, PDA and printer; and
3) a name of the device, e.g., a user definable string such as "Bob's PDA".

After discovery, the user may make a selection of the host device to be connected to, or the connection establishment may be made automatically. To find out if the specific service is supported by the host system, the IAS service connection may be established.

### IAS access:

The IAS service access is used to find out if the host system supports the service that is required. If there are multiple host systems, an IrLAP connection is made with all of them, one by one, to find out which system supports the required service. This IAS access may be done through binding the local LSAP X with the host LSAP 0, with the IAS server always being resident at LSAP 0. The information that is fetched by the local IAS client from the host IAS database is defined in the service specification. The information may vary depending on the service, but one or two things that will always be present are the instance name of the service and the LSAP at which it can be accessed on the host system.

### Service Connection Establishment:

When the desired host with the required service is located, a service-to-service connection is established. This service connection is not active until the local LSAP is bound with the host LSAP by the IrLMP layer. In this binding the LSAPs are interconnected so that data coming to the local LSAP from the bound host LSAP is accepted, and vise versa. After this point the service specific protocol may be activated.

The IrLMP LSAP binding primitives may contain a field of user date (up to 60 octets). This data can be used in the connection establishment for such purposes as exchanging encryption keys. The encryption method, if any, is such that the service implementation may use any available encryption method. Common to all these methods is, that their area of influence is limited to the data transmitted between the two given LSAPs. IrLAP or IrLMP protocol specific fields in the frames are not affected by the encryption. A third party may be able to see that transactions are taking place between the two service instances, but is unable to decipher the actual data content.

### Implementation:

The implementation of the protocol stack should be such that the end user is given an indication when the IrLAP layer connection is lost. The IrDA specification dictates that a "No Activity" indication be given to the end user when the link has been lost for 3 seconds. The actual service connection will be lost when a disconnect indication is received. This may happen when the link has been lost from 8 to 40 seconds (a negotiated value).

### Intermediate Node:

The IrDA protocol stack of the invention may act as an intermediate node between two devices supporting known services. In such an implementation, there are five important factors to be taken into consideration:
- the service specification and the IAS information
- implementation of the connection establishment
- use of encryption
- user interaction and indications
- interfacing to the existing service protocol stack.

In general, it is important to understand the extent of the IrDA specifications in this regard in that some things are left out on purpose, to give the designer the freedom of different implementation choices. It will be within the purview of those of skill in the art to implement the invention in the context of the IrDA specifications.

This kind of protocol stack can be used in a very large variety of devices, such as, remote controllers with feedback for tuners, as well as televisions, videos, audio equipment, and PCs. Also, it can be used for data transactions by request, e.g., pager reporting of received numbers, phone reporting of caller ID, or cellular telephone sending of a phone book entry. Further, it is applicable to data acquisition systems, such as, for portable GPS reporting of changes of location and medical systems.

Various ways for implementing the invention comprise:
Using the connection-less data service;
Using XID frames; or
Using proprietary or open object definitions.

The preferred approach is to use the connection-less data service that is already present in the IrDA specification along with the emerging OBEX object definitions. This method requires no changes in existing systems. The open service specification ensures connectivity between systems from different vendors. Connection-oriented data may also be used but not in all situations because of the MAC rules, or the size of the implementation, or the performance of the microprocessor.

The invention makes it possible for the consumer electronics industry to implement the IrDA protocols in their systems so that the manufacturers of these systems will be inclined to adopt the IrDA hardware specifications. This will promote standardization of the IR protocols. The hardware specifications may require some changes concerning the distance and the output power of the IR systems, but support of the common hardware is the basic requirement for connectivity.

Supporting the same hardware platform and the same IrDA protocols in both the communications and consumer electronics industries should attract more and more companies to consider the connectivity as a value in the market. This support also means that many interference issues would be avoided, because the IrDA protocols do support Media Access Control to minimize interference.

The invention can be applied to a very large variety of devices such as the aforementioned remote controllers for tuners, televisions, videos, audio equiptment, and PCs, as well as phones, cellular phones, pagers, toys, data generating systems such as portable GPS receivers, watches or PIMs with alarms or time functions or for the entering of appointments.

Even though the IrDA protocols can be used for the systems in the consumer electronics field without modifications, there may be some changes required in the IrDA IrLAP media access rules and in the hardware layer specifications, which changes will be within the skill of the art in the light of the foregoing descriptions.

## Claims

1. A method of defining an Infrared Data Association protocol stack having a series of layers for providing transaction support for a system compatible with the Infrared Data Association specification which includes at least a transceiver device and a host adapted for infrared transmissions therebetween, the method **characterized by** the steps of:
providing a Connectivity layer defining the operating conditions for a physical infrared link between said transceiver device and said host;
providing a Link Access Protocol layer operable to cooperate with said Connectivity layer, said Link Access Protocol layer defining the specification for establishing a physical infrared link between said transceiver device and said host and comprising:
Media Access Control rules for the Link Access Protocol specification defining the requirements before the initiation of an infrared transmission between said transceiver device and said host;
Framing rules for defining the form of transmitted and received infrared transmissions between said transceiver device and said host; and
connection-less data defining rules for the Link Access Protocol layer, the rules including object exchange rules of the Object Exchange specification;
providing a Link Management Protocol layer operable to cooperate with said Link Access Protocol layer, said Link Management Protocol layer defining the specification for establishing service-to-service connection binding and division of a reliable Link Access Protocol connection into multiple channels using frame-by-frame multiplexing, and comprising:
connection-less data defining rules for the Link Management Protocol layer, the rules including object exchange rules of the Object Exchange specification; and
connection-less Link Service Access Point defining rules for establishing a service-to-service connection by binding a Link Service Access Point of said transceiver device with an Link Service Access Point of said host for transmitting and accepting data in infrared transmissions exchanged therebetween; and
implementing the stack defined by said method steps, using the connection-less data service present in the Infrared Data Association specification and using the Object Exchange object definitions.

2. The method of claim 1 further comprising the step of providing a Transaction Service layer, cooperating with said Link Management Protocol layer.

3. The method of claim 1 or 2 further comprising the step of providing an application Layer, cooperating with said Link Management Protocol layer, containing the services that support functions needed by applications.

4. The method of claim 1, 2 or 3 wherein said services comprise the Infrared Data Association specified Information Access Service.

5. The method of any preceding claim wherein said stack is implemented using an Open Systems Interconnection Model.

6. The method of any preceding claim wherein said Link Access Protocol layer supports discovery of other devices and reliable data transmission service.

7. The method of any preceding claim wherein said Link Management Protocol layer supports service-to-service connection binding, and division of the reliable Link Access Protocol connection to multiple channels whereby the frame-by-frame multiplexing enables multiple concurrent services.

8. A system compatible with the Infrared Data Association specification which includes a transceiver device and a host and means for providing transaction support for infrared transmissions between said transceiver device and host by producing an Infrared Data Association protocol stack having a series of layers, **characterized in that** said means comprises:
means for producing a Connectivity layer for defining the operating conditions for a physical infrared link between a transceiver device and a host;
means for producing a Link Access Protocol layer operable to cooperate with said Connectivity layer, said Link Access Protocol layer being arranged to define the specification for establishing a physical infrared link between a transceiver device and a host, and comprising:
Media Access Control rules for the Link Access Protocol specification defining the requirements before the initiation of an infrared transmission between a transceiver device and a host;
Framing rules for defining the form of transmitted and received infrared transmissions between a transceiver device and a host; and
connection-less data defining rules for the Link Access Protocol layer, the rules including object exchange rules of the Object Exchange specification;
means for producing a Link Management Protocol layer operable to cooperate with said Link Access Protocol layer, said Link Management Protocol layer being arranged to define the specification for establishing service-to-service connection binding and division of a reliable Link Access Protocol connection to multiple channels using frame-by-frame multiplexing, and comprising:
connection-less data defining rules for the Link Management Protocol layer, the rules including object exchange rules of the Object Exchange specification; and
connection-less Link Service Access Point defining rules for establishing a service-to-service connection by binding a transceiver device Link Service Access Point with a host Link Service Access Point for transmitting and accepting data in infrared transmissions exchanged therebetween; and said means for providing transaction support
being used for implementing said stack using the connection-less data service present in the Infrared Data Association specification and using the Object Exchange object definitions.

9. A system as in claim 8 further comprising means for providing a Transaction Service layer, cooperating with said Link Management Protocol layer.

10. A system as in claim 8 or 9 further comprising means for providing an application layer, cooperating with said Link Management Protocol layer, containing the services that support functions needed by applications.

11. A system as in claim 10 wherein said services comprise the Infrared Data Association specified Information Access Service.

12. A system as in any of claims 8 to 11 further comprising means for implementing said stack using an Open Systems Interconnection (OSI) Model.

13. A system as in any of claims 8 to 12 wherein said Link Access Protocol layer further comprises means for supporting discovery of other devices and reliable data transmission services.

14. A system as in any of claims 8 to 13 wherein said Link Management Protocol layer further comprises means for supporting service-to-service connection binding, and division of the reliable Link Access Protocol connection to multiple channels whereby the frame-by-frame multiplexing enables multiple concurrent services.

15. A protocol stack compatible with the Infrared Data Association specification for providing transaction support for a system including a transceiver device and a host adapted for infrared transmissions therebetween, said protocol stack having a series of layers and being incorporated in at least one of said transceiver and host, **characterized in that** the protocol stack comprises:
a Connectivity layer defining the operating conditions for a physical infrared link between said transceiver device and said host;
a Link Access Protocol layer operable to cooperate with said Connectivity layer, said Link Access Protocol layer defining the specification for establishing a physical infrared link between said transceiver device and said host and comprising:
Media Access Control rules for the Link Access Protocol specification defining the requirements before the initiation of an infrared transmission between said transceiver device and said host;
Framing rules for defining the form of transmitted and received infrared transmissions between said transceiver device and said host; and connection-less data defining rules for the Link Access Protocol layer, the rules including object exchange rules of the Object Exchange specification;
a Link Management Protocol layer operable to cooperate with said Link Access Protocol layer, said Link Management Protocol layer defining the specification for establishing service-to-service connection binding and division of a reliable Link Access Protocol connection into multiple channels using frame-by-frame multiplexing, and comprising:
connection-less data defining rules for the Link Management Protocol layer, the rules including object exchange rules of the Object Exchange specification; and
connection-less Link Service Access Point defining rules for establishing a service-to-service connection by binding a Link Service Access Point of said transceiver device with an Link Service Access Point of said host for transmitting and accepting data in infrared transmissions exchanged therebetween; and
wherein said stack is implemented using the connection-less data service present in the Infrared Data Association specification and using the Object Exchange object definitions.

16. A protocol stack as in claim 15 further providing a Transaction Service layer, cooperating with said Link Management Protocol layer.

17. A protocol stack as in claim 15 or 16 further providing an application layer, cooperating with said Link Management Protocol layer, containing the services that support functions needed by applications.

18. A protocol stack as in claim 17 wherein said services comprise the Infrared Data Association specified Information Access Service.

19. A protocol stack as in any of claims 15 to 18 wherein said Link Access Protocol layer further supports discovery of other devices and reliable data transmission services.

20. A protocol stack as in any of claims 15 to 19 wherein said Link Management Protocol layer further supports service-to-service connection binding, and division of the reliable Link Access Protocol connection to multiple channels whereby the frame-by-frame multiplexing enables multiple concurrent services.

## Patentansprüche

1. Verfahren des Definierens eines Infrarot-Daten-Vereinigung-Protokollstapels mit einer Reihe von Schichten zum Bereitstellen einer Transaktionsunterstützung für ein System, das mit der Infrarot-Daten-Vereinigung-Spezifikation kompatibel ist, welches zumindest eine Sender-Empfänger-Einheit und einen Host aufweist, die für Infrarotübertragungen zwischen diesen angepasst sind, **gekennzeichnet durch** die Schritte:
Bereitstellen einer Konnektivitätsschicht, die die Betriebszustände für eine physikalische Infrarot-Verbindung zwischen der Sender-Empfänger-Einheit und dem Host definiert;
Bereitstellen einer Verbindungszugriffsprotokollschicht, die betreibbar ist, um mit der Konnektivitätsschicht zusammenzuarbeiten, wobei die Verbindungszugriffsprotokollschicht die Spezifikation zum Herstellen einer physikalischen Infrarot-Verbindung zwischen der Sender-Empfänger-Einheit und dem Host definiert, und aufweist:
Medienzugriffssteuerungsregeln für die Verbindungszugriffsprotokollspezifikation, die die Erfordernisse vor der Initiierung einer Infrarotübertragung zwischen der Sender-Empfänger-Einheit und dem Host definieren;
Rahmungsregeln zum Definieren der Form von übertragenen und empfangenen Infrarotübertragungen zwischen der Sender-Empfänger-Einheit und dem Host; und
verbindungslose Daten, die Regeln für die Verbindungszugriffsprotokollschicht definieren, wobei die Regeln Objektaustauschregeln der Objektaustauschspezifikation umfassen; Bereitstellen einer
Verbindungsverwaltungsprotokollschicht, die betreibbar ist, um mit der Verbindungszugriffsprotokollschicht zusammenzuarbeiten, wobei die Verbindungsverwaltungsprotokollschicht die Spezifikation zum Herstellen einer Dienst-zu-Dienst-Verbindungs-Bindung und Aufteilung einer verlässlichen Verbindungszugriffsprotokollverbindung in mehrere Kanäle unter Verwendung von Rahmen-für-Rahmen-Multiplexen definiert, und aufweist:
verbindungslose Daten, die Regeln für die Verbindungsverwaltungsprotokollschicht definieren, wobei die Regeln Objektaustauschregeln der Objektaustauschspezifikation umfassen; und
einen verbindungslosen Verbindungsdienstzugriffspunkt, der Regeln zum Herstellen einer Dienst-zu-Dienst-Verbindung **durch** Bindung eines Verbindungsdienstzugriffspunkt der Sender-Empfänder-Einheit mit einem Verbindungsdienstzugriffspunkt des Hosts definiert, zum Übertragen und Akzeptieren von Daten in Infrarotübertragungen, die zwischen diesen ausgetauscht werden; und Implementieren des Stapels, der **durch** die Verfahrensschritte definiert wird, unter Verwendung des verbindungslosen Datendienstes, der in der Infrarot-Daten-Vereinigung-Spezifikation vorhanden ist, und unter Verwendung der Objektaustauschobjektdefinitionen.

2. Verfahren gemäß Anspruch 1, weiter mit dem Schritt des Bereitstellens einer Transaktionsdienstschicht, die mit der Verbindungsverwaltungsprotokollschicht zusammenarbeitet.

3. Verfahren gemäß Anspruch 1 oder 2, weiter mit dem Schritt des Bereitstellens einer Anwendungsschicht, die mit der Verbindungsverwaltungsprotokollschicht zusammenarbeitet, die die Dienste enthält, die Funktionen unterstützen, die von den Anwendungen benötigt werden.

4. Verfahren gemäß Anspruch 1, 2 oder 3, wobei die Dienste einen durch die Infrarot-Daten-Vereinigung spezifizierten Informationszugriffsdienst aufweisen.

5. Verfahren gemäß einem der vorstehenden Ansprüche, wobei der Stapel unter Verwendung eines "Open System Interconnection"-Modells implementiert wird.

6. Verfahren gemäß einem der vorstehenden Ansprüche, wobei die Verbindungszugriffsprotokollschicht eine Ermittlung von anderen Einheiten und eines verlässlichen Datenübertragungsdienstes unterstützt.

7. Verfahren gemäß einem der vorstehenden Ansprüche, wobei die Verbindungsverwaltungsprotokollschicht eine Dienst-zu-Dienst-Verbindungs-Bindung und eine Aufteilung der verlässlichen Verbindungszugriffsprotokollverbindung in mehrere Kanäle unterstützt, wobei das Rahmen-für-Rahmen-Multiplexen mehrere gleichzeitige Dienste ermöglicht.

8. System, das mit der Infrarot-Daten-Vereinigung-Spezifikation kompatibel ist, welches zumindest eine Sender-Empfänger-Einheit und einen Host und eine Einrichtung aufweist zum Bereitstellen einer Transaktionsunterstützung für Infrarotübertragungen zwischen der Sender-Empfänger-Einheit und dem Host durch Produzieren eines Infrarot-Daten-Vereinigung-Protokollstapels mit einer Reihe von Schichten, wobei die Einrichtung aufweist:
eine Einrichtung zum Produzieren einer Konnektivitätsschicht zum Definieren der Betriebszustände für eine physikalische Infrarot-Verbindung zwischen einer Sender-Empfänger-Einheit und einem Host;
eine Einrichtung zum Produzieren einer Verbindungszugriffsprotokollschicht, die betreibbar ist, um mit der Konnektivitätsschicht zusammenzuarbeiten, wobei die Verbindungszugriffsprotokollschicht eingerichtet ist, um die Spezifikation zum Herstellen einer physikalischen Infrarot-Verbindung zwischen einer Sender-Empfänger-Einheit und einem Host zu definieren, und aufweist:
Medienzugriffssteuerungsregeln für die Verbindungszugriffsprotokollspezifikation, die die Erfordernisse vor der Initiierung einer Infrarotübertragung zwischen einer Sender-Empfänger-Einheit und einem Host definieren;
Rahmungsregeln zum Definieren der Form von übertragenen und empfangenen Infrarotübertragungen zwischen einer Sender-Empfänger-Einheit und einem Host; und
verbindungslose Daten, die Regeln für die Verbindungszugriffsprotokollschicht definieren, wobei die Regeln Objektaustauschregeln der Objektaustauschspezifikation umfassen;
eine Einrichtung zum Produzieren einer Verbindungsverwaltungsprotokollschicht, die betreibbar ist, um mit der Verbindungszugriffsprotokollschicht zusammenzuarbeiten, wobei die Verbindungsverwaltungsprotokollschicht eingerichtet ist, um die Spezifikation zum Herstellen einer Dienst-zu-Dienst-Verbindungs-Bindung und Aufteilung einer verlässlichen Verbindungszugriffsprotokollverbindung in mehrere Kanäle unter Verwendung von Rahmen-für-Rahmen-Multiplexen zu definieren, und aufweist:
verbindungslose Daten, die Regeln für die Verbindungsverwaltungsprotokollschicht definieren, wobei die Regeln Objektaustauschregeln der Objektaustauschspezifikation umfassen; und
einen verbindungslosen Verbindungsdienstzugriffspunkt, der Regeln zum Herstellen einer Dienst-zu-Dienst-Verbindung durch Bindung eines Verbindungsdienstzugriffspunkts der Sender-Empfänder-Einheit mit einem Verbindungsdienstzugriffspunkt des Hosts definiert zum Übertragen und Akzeptieren von Daten in Infrarotübertragungen, die zwischen diesen ausgetauscht werden; und
wobei die Einrichtung zum Bereitstellen der Transaktionsunterstützung verwendet wird zum Implementieren des Stapels unter Verwendung des verbindungslosen Datendienstes, der in der Infrarot-Daten-Vereinigung-Spezifikation vorhanden ist, und unter Verwendung der Objektaustauschobjektdefinitionen.

9. System gemäß Anspruch 8, weiter mit einer Einrichtung zum Bereitstellen einer Transaktionsdienstschicht, die mit der Verbindungsverwaltungsprotokollschicht zusammenarbeitet.

10. System gemäß Anspruch 8 oder 9, weiter mit einer Einrichtung zum Bereitstellen einer Anwendungsschicht, die mit der Verbindungsverwaltungsprotokollschicht zusammenarbeitet, die die Dienste enthält, die Funktionen unterstützen, die von den Anwendungen benötigt werden.

11. System gemäß Anspruch 10, wobei die Dienste einen durch die Infrarot-Daten-Vereinigung spezifizierten Informationszugriffsdienst aufweisen.

12. System gemäß einem der Ansprüche 8 bis 11, weiter mit einer Einrichtung zum Implementieren des Stapel unter Verwendung eines "Open System Interconnection"-Modells.

13. System gemäß einem der Ansprüche 8 bis 12, wobei die Verbindungszugriffsprotokollschicht weiter eine Einrichtung zum Unterstützen einer Ermittlung von anderen Einheiten und verlässlichen Datenübertragungsdiensten.

14. System gemäß einem der Ansprüche 8 bis 13, wobei die Verbindungsverwaltungsprotokollschicht weiter eine Einrichtung zum Unterstützen einer Dient-zu-Dienst-Verbindungs-Bindung und einer Aufteilung der verlässlichen Verbindungszugriffsprotokollverbindung in mehrere Kanäle aufweist, wobei das Rahmen-für-Rahmen-Multiplexen mehrere gleichzeitige Dienste ermöglicht.

15. Protokollstapel, der mit der Infrarot-Daten-Vereinigung-Spezifikation kompatibel ist zum Bereitstellen einer Transaktionsunterstützung für ein System mit einer Sender-Empfänger-Einheit und einem Host, die für Infrarotübertragungen zwischen diesen angepasst sind, wobei der Protokollstapel eine Reihe von Schichten aufweist und in zumindest einem der Sender-Empfänger-Einheit und dem Host eingebunden ist, **dadurch gekennzeichnet, dass** der Stapel aufweist:
eine Konnektivitätsschicht, die die Betriebszustände für eine physikalische Infrarot-Verbindung zwischen der Sender-Empfänger-Einheit und dem Host definiert;
eine Verbindungszugriffsprotokollschicht, die betreibbar ist, um mit der Konnektivitätsschicht zusammenzuarbeiten, wobei die Verbindungszugriffsprotokollschicht die Spezifikation zum Herstellen einer physikalischen Infrarot-Verbindung zwischen der Sender-Empfänger-Einheit und dem Host definiert, und aufweist:
Medienzugriffssteuerungsregeln für die Verbindungszugriffsprotokollspezifikation, die die Erfordernisse vor der Initiierung einer Infrarotübertragung zwischen der Sender-Empfänger-Einheit und dem Host definieren;
Rahmungsregeln zum Definieren der Form von übertragenen und empfangenen Infrarotübertragungen zwischen der Sender-Empfänger-Einheit und dem Host; und verbindungslose Daten, die Regeln für die Verbindungszugriffsprotokollschicht definieren, wobei die Regeln Objektaustauschregeln der Objektaustauschspezifikation umfassen;
eine Verbindungsverwaltungsprotokollschicht, die betreibbar ist, um mit der Verbindungszugriffsprotokollschicht zusammenzuarbeiten, wobei die Verbindungsverwaltungsprotokollschicht die Spezifikation zum Herstellen einer Dienst-zu-Dienst-Verbindungs-Bindung und Aufteilung einer verlässlichen Verbindungszugriffsprotokollverbindung in mehrere Kanäle unter Verwendung von Rahmen-für-Rahmen-Multiplexen definiert, und aufweist:
verbindungslose Daten, die Regeln für die Verbindungsverwaltungsprotokollschicht definieren, wobei die Regeln Objektaustauschregeln der Objektaustauschspezifikation umfassen; und
einen verbindungslosen Verbindungsdienstzugriffspunkt, der Regeln zum Herstellen einer Dienst-zu-Dienst-Verbindung durch Bindung eines Verbindungsdienstzugriffspunkt der Sender-Empfänder-Einheit mit einem Verbindungsdienstzugriffspunkt des Hosts definiert zum Übertragen und Akzeptieren von Daten in Infrarotübertragungen, die zwischen diesen ausgetauscht werden; und
wobei der Stapel unter Verwendung des verbindungslosen Datendienstes, der in der Infrarot-Daten-Vereinigung-Spezifikation vorhanden ist, und unter Verwendung der Objektaustauschobjektdefinitionen implementiert wird.

16. Protokollstapel gemäß Anspruch 15, der weiter eine Transaktionsdienstschicht bereitstellt, die mit der Verbindungsverwaltungsprotokollschicht zusammenarbeitet.

17. Protokollstapel gemäß Anspruch 15 oder 16, der weiter eine Anwendungsschicht bereitstellt, die mit der Verbindungsverwaltungsprotokollschicht zusammenarbeitet, die die Dienste enthält, die Funktionen unterstützen, die von den Anwendungen benötigt werden.

18. Protokollstapel gemäß Anspruch 17, wobei die Dienste einen durch die Infrarot-Daten-Vereinigung spezifizierten Informationszugriffsdienst aufweisen.

19. Protokollstapel gemäß einem der Ansprüche 15 bis 18, wobei die Verbindungszugriffsprotokollschicht weiter eine Ermittlung von anderen Einheiten und verlässlichen Datenübertragungsdiensten unterstützt.

20. Protokollstapel gemäß einem der Ansprüche 15 bis 19, wobei die Verbindungsverwaltungsprotokollschicht weiter eine Dienst-zu-Dienst-Verbindungs-Bindung und eine Aufteilung der verlässlichen Verbindungszugriffsprotokollverbindung in mehrere Kanäle unterstützt, wobei das Rahmen-für-Rahmen-Multiplexen mehrere gleichzeitige Dienste ermöglicht.

## Revendications

1. Procédé pour définir une pile de protocoles d'association de données à infrarouge comprenant une série de couches pour fournir un support de transaction à un système compatible avec la spécification d'Association de données à infrarouge qui comprend au moins un émetteur-récepteur et un hôte adaptés pour des transmissions à infrarouge entre eux, le procédé étant **caractérisé par** les étapes consistant à :
fournir une couche de connectivité définissant les conditions fonctionnelles pour une liaison physique à infrarouge entre ledit émetteur-récepteur et ledit hôte ;
fournir une couche de protocole d'accès à la liaison pouvant fonctionner de façon à coopérer avec ladite couche de connectivité, ladite couche de protocole d'accès à la liaison définissant la spécification pour établir une liaison physique à infrarouge entre ledit émetteur-récepteur et ledit hôte et comprenant :
des règles de commande d'accès au support pour la spécification de protocole d'accès à la liaison définissant les conditions requises avant d'initier une transmission à infrarouge entre ledit émetteur-récepteur et ledit hôte ;
des règles de cadrage pour définir la forme de transmissions à infrarouge transmises et reçues entre ledit émetteur-récepteur et ledit hôte ; et
des règles définissant des données sans connexion pour la couche de protocole d'accès à la liaison, les règles comprenant des règles d'échange d'objet de la spécification d'échange d'objet ;
fournir une couche de protocole de gestion de liaison pouvant fonctionner de façon à coopérer avec ladite couche de protocole d'accès à la liaison, ladite couche de protocole de gestion de liaison définissant la spécification pour établir une liaison de connexion de service à service et une division d'une connexion fiable de protocole d'accès à la liaison en plusieurs canaux en utilisant un multiplexage trame par trame, et comprenant :
des règles définissant des données sans connexion pour la couche de protocole de gestion de liaison, les règles comprenant des règles d'échange d'objet de la spécification d'échange d'objet ; et
des règles définissant un point d'accès au service de liaison sans connexion pour établir une connexion de service à service en liant un point d'accès au service de liaison dudit émetteur-récepteur à un point d'accès au service de liaison dudit hôte pour transmettre et accepter des données dans des transmissions à infrarouge échangées entre eux ; et
implémenter la pile définie par lesdites étapes du procédé en utilisant le service de données sans connexion présent dans la spécification d'association de données à infrarouge et en utilisant les définitions d'échange d'objet.

2. Procédé selon la revendication 1, comprenant en outre l'étape consistant à fournir une couche de service de transaction en coopération avec ladite couche de protocole de gestion de liaison.

3. Procédé selon la revendication 1 ou selon la revendication 2, comprenant en outre l'étape consistant à fournir une couche d'application, en coopération avec ladite couche de protocole de gestion de liaison, contenant les services qui supportent les fonctions nécessaires aux applications.

4. Procédé selon les revendications 1, 2 ou 3, dans lequel lesdits services comprennent un service d'accès à des informations spécifié par l'association de données à infrarouge.

5. Procédé selon l'une quelconque des revendications précédentes, dans lequel ladite pile est implémentée en utilisant un modèle d'interconnexion de systèmes ouverts.

6. Procédé selon l'une quelconque des revendications précédentes, dans lequel ladite couche de protocole d'accès à la liaison supporte la découverte d'autres dispositifs et un service de transmission de données fiable.

7. Procédé selon l'une quelconque des revendications précédentes, dans lequel ladite couche de protocole de gestion de liaison supporte une liaison de connexion de service à service et la division de la connexion fiable de protocole d'accès à la liaison en plusieurs canaux, moyennant quoi le multiplexage de trame par trame autorise plusieurs services concurrents.

8. Système compatible avec la spécification d'association de données à infrarouge qui comprend un émetteur-récepteur et un hôte et un moyen pour fournir un support de transaction pour des transmissions à infrarouge entre ledit émetteur-récepteur et ledit hôte en produisant une pile de protocoles d'association de données à infrarouge comprenant une série de couches, **caractérisé en ce que** ledit moyen comprend :
des moyens pour produire une couche de connectivité pour définir les conditions fonctionnelles pour une liaison physique à infrarouge entre un émetteur-récepteur et un hôte ;
des moyens pour produire une couche de protocole d'accès à la liaison pouvant fonctionner de façon à coopérer avec ladite couche de connectivité, ladite couche de protocole d'accès à la liaison étant agencée pour définir la spécification pour établir une liaison physique à infrarouge entre un émetteur-récepteur et un hôte, et comprenant :
des règles de commande d'accès au support pour la spécification de protocole d'accès à la liaison définissant les conditions requises avant d'initier une transmission à infrarouge entre un émetteur-récepteur et un hôte ;
des règles de cadrage pour définir la forme de transmissions à infrarouge transmises et reçues entre un émetteur-récepteur et un hôte ; et
des règles définissant des données sans connexion pour la couche de protocole d'accès à la liaison, les règles comprenant des règles d'échange d'objet de la spécification d'échange d'objet ;
des moyens pour produire une couche de protocole de gestion de liaison pouvant fonctionner pour coopérer avec ladite couche de protocole d'accès à la liaison, ladite couche de protocole de gestion de liaison étant agencée pour définir la spécification pour établir une liaison de connexion de service à service et une division d'une connexion fiable de protocole d'accès à la liaison en plusieurs canaux en utilisant un multiplexage trame par trame, et comprenant :
des règles définissant des données sans connexion pour la couche de protocole de gestion de liaison, les règles comprenant des règles d'échange d'objet de la spécification d'échange d'objet ; et
des règles définissant un point d'accès au service de liaison sans connexion pour établir une connexion de service à service en liant un point d'accès au service de liaison émetteur-récepteur à un point d'accès au service de liaison hôte pour transmettre et accepter des données dans des transmissions à infrarouge échangées entre ceux-ci ; lesdits moyens destinés à fournir un support de transaction étant utilisés pour implémenter ladite pile en utilisant le service de données sans connexion présent dans la spécification d'association de données à infrarouge et en utilisant les définitions objet d'échange d'objet.

9. Système selon la revendication 8, comprenant en outre des moyens pour fournir une couche de service de transaction, en coopération avec ladite couche de protocole de gestion de liaison.

10. Système selon la revendication 8 ou 9, comprenant en outre des moyens pour fournir une couche d'application, en coopération avec ladite couche de protocole de gestion de liaison, contenant les services qui supportent les fonctions de support nécessaires aux applications.

11. Système selon la revendication 10, dans lequel lesdits services comprennent le service d'accès aux informations spécifiées par l'association de données à infrarouge.

12. Système selon l'une quelconque des revendications 8 à 11, comprenant en outre des moyens pour implémenter ladite pile en utilisant un modèle d'interconnexion de systèmes ouverts (OSI).

13. Système selon l'une quelconque des revendications 8 à 12, dans lequel ladite couche de protocole d'accès à la liaison comprend en outre des moyens pour supporter la découverte d'autres dispositifs et services de transmission de données fiables.

14. Système selon l'une quelconque des revendications 8 à 13, dans lequel ladite couche de protocole de gestion de liaison comprend en outre des moyens pour supporter une liaison de connexion de service à service et une division de la connexion de protocoles d'accès à la liaison en plusieurs canaux, moyennant quoi le multiplexage trame par trame autorise plusieurs services concurrents.

15. Pile de protocoles compatible avec la spécification d'association de données à infrarouge pour fournir un support de transaction pour un système comprenant un émetteur-récepteur et un hôte adaptés pour une transmission à infrarouge entre eux, ladite pile de protocoles comprenant une série de couches et étant incorporée dans au moins un élément parmi ledit émetteur-récepteur et ledit hôte, **caractérisée en ce que** la pile de protocoles comprend :
une couche de connectivité définissant les conditions fonctionnelles pour une liaison physique à infrarouge entre ledit émetteur-récepteur et ledit hôte ;
une couche de protocole d'accès à la liaison pouvant fonctionner pour coopérer avec ladite couche de connectivité, ladite couche de protocole d'accès à la liaison définissant la spécification pour établir une liaison physique à infrarouge entre ledit émetteur-récepteur et ledit hôte et comprenant :
des règles de commande d'accès au support pour la spécification de protocole d'accès à la liaison définissant les conditions requises avant d'initier une transmission à infrarouge entre ledit émetteur-récepteur et ledit hôte ;
des règles de cadrage pour définir la forme de transmissions à infrarouge transmises et reçues entre ledit émetteur-récepteur et ledit hôte ; et
des règles définissant des données sans connexion pour la couche de protocole d'accès à la liaison, les règles comprenant des règles d'échange d'objet de la spécification d'échange d'objet ;
une couche de protocole de gestion de liaison pouvant fonctionner pour coopérer avec ladite couche de protocole d'accès à la liaison, ladite couche de protocole de gestion de liaison définissant la spécification pour établir une liaison de connexion de service à service et une division d'une connexion fiable de protocole d'accès à la liaison en plusieurs canaux en utilisant un multiplexage trame par trame, et comprenant :
des règles définissant des données sans connexion pour la couche de protocole de gestion de liaison, les règles comprenant des règles d'échange d'objet de la spécification d'échange d'objet ; et
des règles définissant un point d'accès au service de liaison sans connexion pour établir une connexion de service à service en liant un point d'accès au service de liaison dudit émetteur-récepteur avec un point d'accès au service de liaison dudit hôte pour transmettre et accepter des données dans des transmissions à infrarouge échangées entre ceux-ci ; et
dans laquelle ladite pile est implémentée en utilisant le service de données sans connexion présent dans la spécification d'association de données à infrarouge et en utilisant les définitions objets d'échange d'objet.

16. Pile de protocoles selon la revendication 15, fournissant en outre une couche de service de transaction, en coopération avec ladite couche de protocole de gestion de liaison.

17. Pile de protocoles selon la revendication 15 ou 16, fournissant en outre une couche d'application, en coopération avec ladite couche de protocole de gestion de liaison, contenant les services qui supportent les fonctions nécessaires aux applications.

18. Pile de protocoles selon la revendication 17, dans laquelle lesdits services comprennent le service d'accès aux informations spécifiées par l'association de données à infrarouge.

19. Pile de protocoles selon l'une quelconque des revendications 15 à 18, dans laquelle ladite couche de protocole d'accès à la liaison supporte en outre la découverte d'autres dispositifs et services de transmission de données fiables.

20. Pile de protocoles selon l'une quelconque des revendications 15 à 19, dans laquelle ladite couche de protocole de gestion de liaison supporte en outre une liaison de connexion de service à service et une division de la connexion fiable de protocole d'accès à la liaison en plusieurs canaux, moyennant quoi le multiplexage trame par trame autorise des services concurrents multiples.
